# EUROPEAN PATENT SPECIFICATION

(11) **EP 3 056 878 B1**
(45) Date of publication and mention of the grant of the patent: **06.05.2020**
(21) Application number: 16157320.9
(22) Date of filing: 15.10.2012
(51) Int. Cl.: G01F 25/00, G01F 1/34, G01M 3/02, G01M 3/28

(54) **SEAL LEAK DETECTION FOR LOW TEMPERATURE PROVER AND METHOD**
LECKSUCHE FÜR DICHTUNGEN VON NIEDRIGTEMPERATUR-PRÜFGERÄT UND VERFAHREN
DÉTECTION DE FUITE POUR JOINTS D'ÉTANCHÉITÉ POUR APPAREIL D'ÉTALONNAGE DE BASSE TEMPÉRATURE ET PROCÉDÉ ASSOCIÉ

(30) Priority: 14.10.2011 US 201161547547 P
(43) Date of publication of application: 17.08.2016
(62) Divisional of application: 12839701.5
(73) Proprietor: Daniel Measurement and Control, Inc., Houston, Texas 77041 (US)
(72) Inventor:
(74) Representative: Williams, Michael David

(56) References cited:
- WO-A1-2006/062512
- GB-A- 1 420 754
- US-A- 3 827 285
- US-A- 4 372 147
- US-A- 4 569 220
- US-A- 4 674 317

## Description

### BACKGROUND

After hydrocarbons have been removed from the ground, the fluid stream (such as crude oil or natural gas) is transported from place to place via pipelines. It is desirable to know with accuracy the amount of fluid flowing in the stream, and particular accuracy is demanded when the fluid is changing hands, or "custody transfer." Custody transfer can occur at a fluid fiscal transfer measurement station or skid, which may include key transfer components such as a measurement device or flow meter, a proving device, associated pipes and valves, and electrical controls. Measurement of the fluid stream flowing through the overall delivery pipeline system starts with the flow meter, which may include a turbine meter, a positive displacement meter, an ultrasonic meter, a coriolis meter or a vortex meter.

Flow characteristics of the fluid stream can change during product delivery that can affect accurate measurement of the product being delivered. Typically, changes of pressure, temperature and flow rate are acknowledged by operator intervention. These changes are represented as changes in the flow characteristics, and are normally verified by the operator via the effects of the changes and their effect on the measurement device. Normally, this verification is conducted by proving the meter with a proving device, or prover. A calibrated prover, adjacent the measurement device on the skid and in fluid communication with the measurement device, samples calibrated volumes of liquid passing through the prover that are compared to the throughput volumes of the measurement device. If there are statistically important differences between the compared volumes, the throughput volume of the measurement device is adjusted to reflect the actual flowing volume as identified by the prover.

The prover has a precisely known volume which is calibrated to known and accepted standards of accuracy, such as those prescribed by the American Petroleum Institute (API) or the internationally accepted ISO standards. The precisely known volume of the prover can be defined as the volume of product between two detector switches that is displaced by the passage of a displacer, such as an elastomeric sphere or a piston. The known volume that is displaced by the prover is compared to the throughput volume of the meter. If the comparison yields a volumetric differential of zero or an acceptable variation therefrom, the flow meter is then said to be accurate within the limits of allowed tolerances. If the volumetric differential exceeds the limits allowed, then evidence is provided indicating that the flow meter may not be accurate. Then, the meter throughput volume can be adjusted to reflect the actual flowing volume as identified by the prover. The adjustment may be made with a meter correction factor.

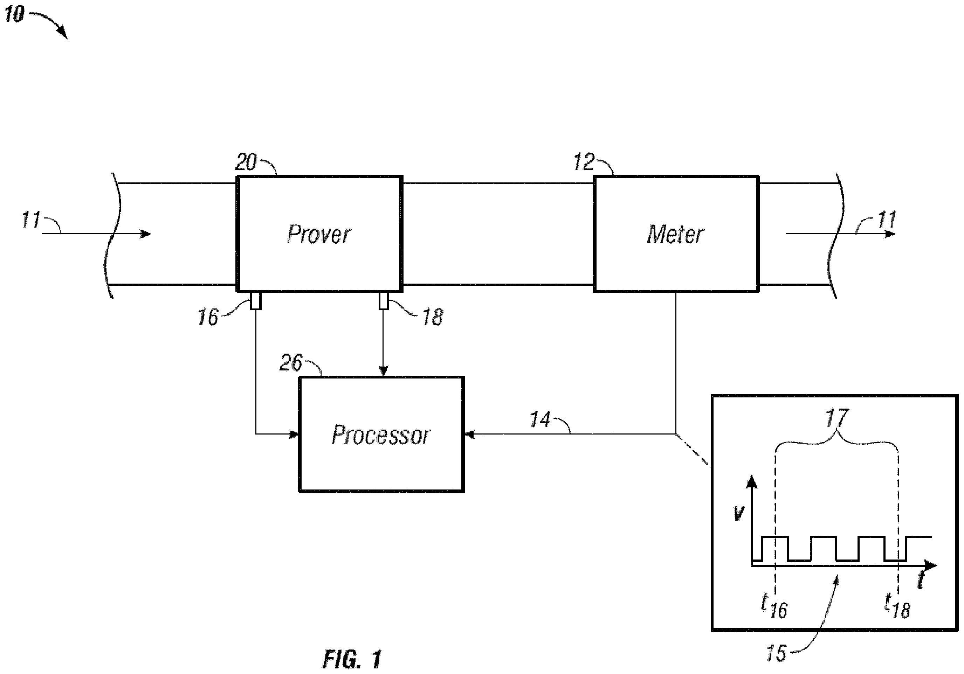

One type of meter is a pulse output meter, which may include a turbine meter, a positive displacement meter, an ultrasonic meter, a coriolis meter or a vortex meter. By way of example, Figure 1 illustrates a system 10 for proving a meter 12, such as a turbine meter. A turbine meter, based on turning of a turbine-like structure within the fluid stream 11, generates electrical pulses 15 where each pulse is proportional to a volume, and the rate of pulses proportional to the volumetric flow rate. The meter 12 volume can be related to a prover 20 volume by flowing a displacer in the prover 20. Generally, the displacer is forced first past an upstream detector 16 then a downstream detector 18 in the prover 20. The volume between detectors 16, 18 is a calibrated prover volume. The flowing displacer first actuates or trips the detector 16 such that a start time t₁₆ is indicated to a processor or computer 26. The processor 26 then collects pulses 15 from the meter 12 via signal line 14. The flowing displacer finally trips the detector 18 to indicate a stop time t₁₈ and thereby a series 17 of collected pulses 15 for a single pass of the displacer. The number 17 of pulses 15 generated by the turbine meter 12 during the single displacer pass, in both directions, through the calibrated prover volume is indicative of the volume measured by the meter during the time t₁₆ to time t₁₈. Multiple displacer passes are required to attain the prover volume. By comparing the prover volume to the volume measured by the meter, the meter may be corrected for volume throughput as defined by the prover.

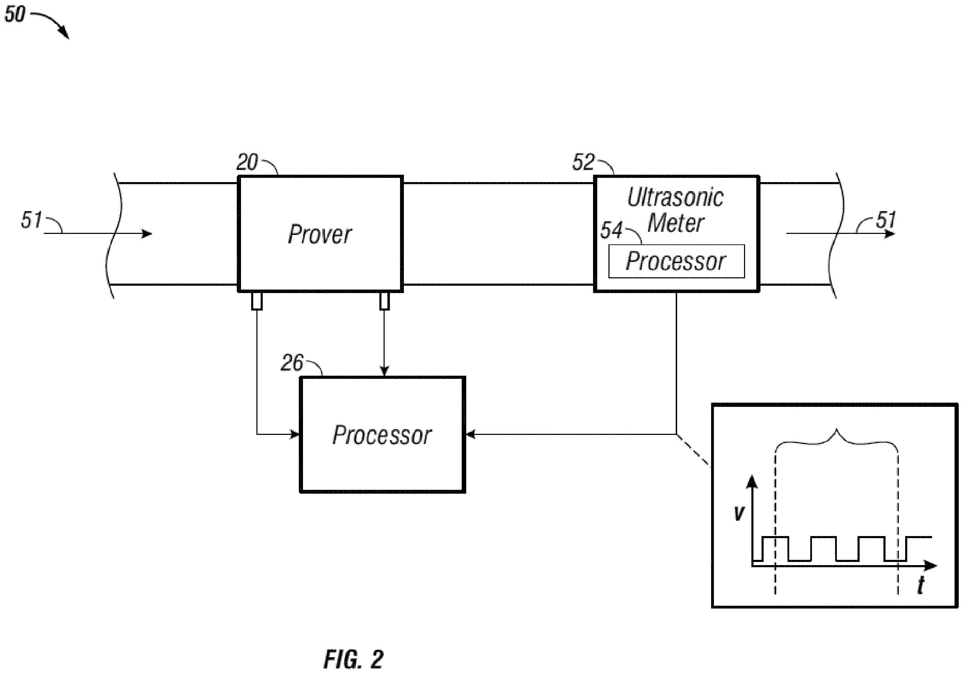

Figure 2 illustrates another system 50 for proving an ultrasonic flow meter 52, using transit time technology. The system 50 also includes a prover 20 and a processor 26. By ultrasonic it is meant that ultrasonic signals are sent back and forth across the fluid stream 51, and based on various characteristics of the ultrasonic signals a fluid flow may be calculated. Ultrasonic meters generate flow rate data in batches where each batch comprises many sets of ultrasonic signals sent back and forth across the fluid, and thus where each batch spans a period of time (*e.g.,* one second). The flow rate determined by the meter corresponds to an average flow rate over the batch time period rather than a flow rate at a particular point in time.

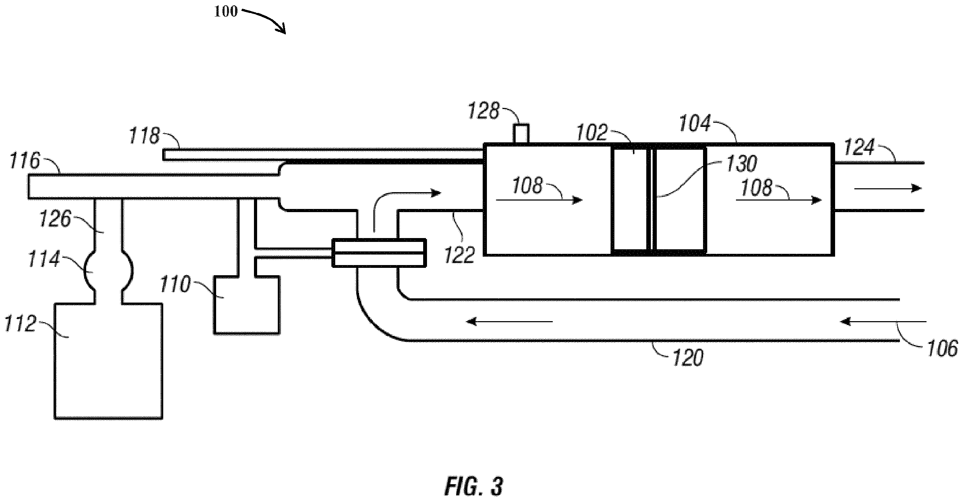

In a particular background example of the prover 20, and with reference to Figure 3, a piston or compact prover 100 is shown. A piston 102 is reciprocally disposed in a flow tube 104. A pipe 120 communicates a flow 106 from a primary pipeline to an inlet 122 of the flow tube 104. The flow 108 of the fluid forces the piston 102 through the flow tube 104, and the flow eventually exits the flow tube 104 through an outlet 124. The flow tube 104 and the piston 102 may also be connected to other components, such as a spring plenum 116 that may have a biasing spring for a poppet valve in the piston 102. A chamber 118 may also be connected to the flow tube 104 and the piston 102 having optical switches for detecting the position of the piston 102 in the flow tube 104. A hydraulic pump and motor 110 is also shown coupled to the flow line 120 and the plenum 116. A hydraulic reservoir 112, a control valve 114 and a hydraulic pressure line 126 are also shown coupled to the plenum 116. As will be shown below, the piston 102 can be adapted according to the principles taught herein.

In some applications, the fluids flowing in the pipelines (primary pipelines and those of the measurement station) are maintained at low temperatures. As used herein, low temperatures, for example, are generally less than about 227.6 K (-50° F), alternatively less than about 222 K (-60° F), alternatively less than about 133.15 K (-220° F), and alternatively less than about 116.5 K (-250° F). These low temperatures may also be referred to as very low temperatures or cryogenic temperatures. Examples of fluids maintained at low temperatures include liquid natural gas (LNG), liquefied petroleum gas (LPG) and liquid nitrogen. Low temperatures of the metered fluids cause numerous problems, such as unsuitability of the prover's sensing devices, wear on components such as seals, and reduced lubrication on the flow tube's inner surface for the low temperature fluids, which tend to be non-lubricating. Carbon steel reacts negatively to low temperature product flowing in the pipeline.

To address these problems, meters operating in very low temperatures are proved by indirect proving methods. Generally, indirect proving is accomplished by proving a meter suitable for very low temperature service using a prover that is not rated for very low temperature service. First, a fluid, generally water, is flowed through a proving meter, and the proving meter is proved in the normal way to establish a meter factor for the proving meter. The proving meter is then used on actual flowing low temperature product to obtain the meter factor for the meter measuring the low temperature product. Consequently, the proving meter is calibrated using a fluid unlike the actual product delivered through the meter (at least with regard to density), leading to incorrect results in the actual product meter to be calibrated.

A system to detect a leak from the seals of a prover is illustrated by the pressure monitoring apparatus of patent application publication US 3,827,285 A.

### BRIEF DESCRIPTION OF THE DRAWINGS

For a detailed description of exemplary embodiments, reference will now be made to the accompanying drawings in which:
Figure 1 is a schematic representation of a system for proving a meter, such as a turbine meter;
Figure 2 is a schematic representation of another system for proving a meter, such as an ultrasonic meter;
Figure 3 is a schematic representation of a bi-directional piston-type prover;
Figure 4 is a perspective view of a piston in accordance with the teachings herein;
Figure 5 is a side view of the piston of Figure 4;
Figure 6 is a cross-section view of the piston of Figures 4 and 5;
Figure 7 is a schematic of a piston in a prover flow tube;
Figure 8 is a schematic of an alternative arrangement of the piston and prover of Figure 7;
Figures 9-15 are schematic representations of an alternative bi-directional piston-type prover including arrangements of a piston launch hold system; and
Figure 16 is a schematic representation of an alternative bi-directional piston-type prover including embodiments of a seal leak detect system in accordance with the invention.

### DETAILED DESCRIPTION

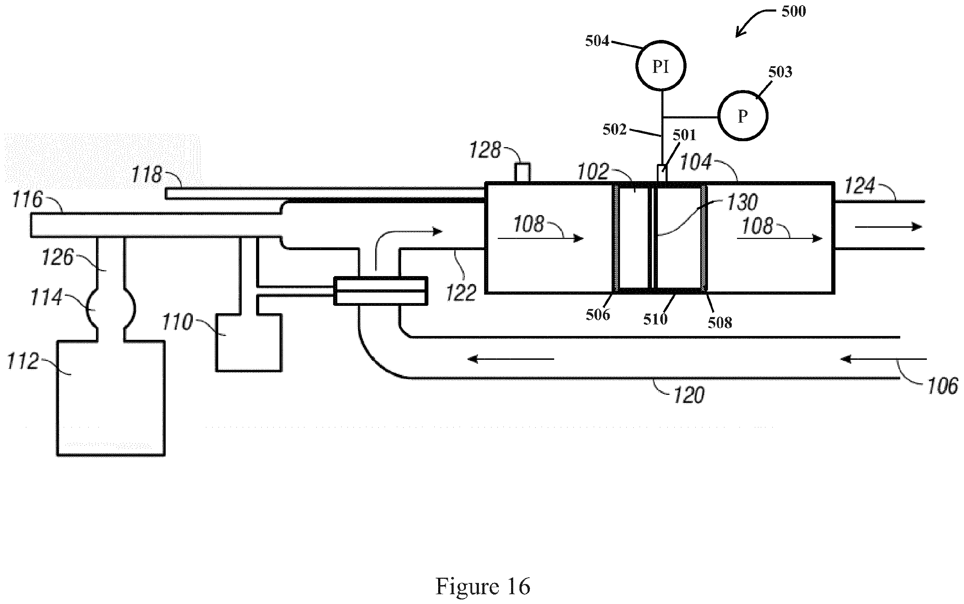

In the drawings and description that follow, like parts are typically marked throughout the specification and drawings with the same reference numerals. The drawing figures are not necessarily to scale. Certain features of the invention may be shown exaggerated in scale or in somewhat schematic form and some details of conventional elements may not be shown in the interest of clarity and conciseness. The present disclosure is susceptible to embodiments of different forms. Specific embodiments are described in detail and are shown in the drawing of figure 16, with the understanding that the present disclosure is to be considered an exemplification of the principles of the disclosure, and is not intended to limit the disclosure to that illustrated and described herein. It is to be fully recognized that the different teachings of the embodiments discussed below may be employed separately or in any suitable combination to produce desired results.

Unless otherwise specified, in the following discussion and in the claims, the terms "including" and "comprising" are used in an open-ended fashion, and thus should be interpreted to mean "including, but not limited to ...". Any use of any form of the terms "connect", "engage", "couple", "attach", or any other term describing an interaction between elements is not meant to limit the interaction to direct interaction between the elements and may also include indirect interaction between the elements described. The term "fluid" may refer to a liquid or gas and is not solely related to any particular type of fluid such as hydrocarbons. The terms "pipe", "conduit", "line" or the like refers to any fluid transmission means. The various characteristics mentioned above, as well as other features and characteristics described in more detail below, will be readily apparent to those skilled in the art upon reading the following detailed description of the embodiments, and by referring to the accompanying drawings.

The examples not part of the invention described herein include a prover, such as a piston-type pipe prover, that is adapted for use with low temperature fluids. Such a prover may be referred to as a cryogenic prover. Particularly, the prover is used with fluids at low temperatures less than 227.6 K (-50° F). More particularly, the prover is used with fluids at low temperatures less than 144.3 K (-200° F). There is presented herein various combinations of components and principles which provide the cryogenic prover, or methods of direct proving of liquids at low temperatures. For example, a sensing device in the prover is improved for low temperatures, such as by adjusting material components or replacing sensors. In some examples not part of the invention, the surface finish of the inner surface of the flow tube is improved for lubricating non-lubrous LNG and LPG products. In further examples not part of the invention, a piston rotator is provided to prevent deterioration of piston seals.

Referring initially to Figure 3, the prover 100 may alternatively include a detection member or target ring 130, disposable at various locations along the axial length of the piston 102. The flow tube 104 includes a sensor 128, also disposable at various locations along the axial length of the flow tube 104, for detecting passage of the target ring 130. The target ring 130 is the trip instigator for entry into and exit from the calibrated measuring section of the flow tube 104 of the prover 100. At very low temperatures, proper communication between the sensor 128 and the target ring 130 is negatively affected due to, for example, the unsuitability of the detector 128 or the materials of the target ring 130 at very low temperatures.

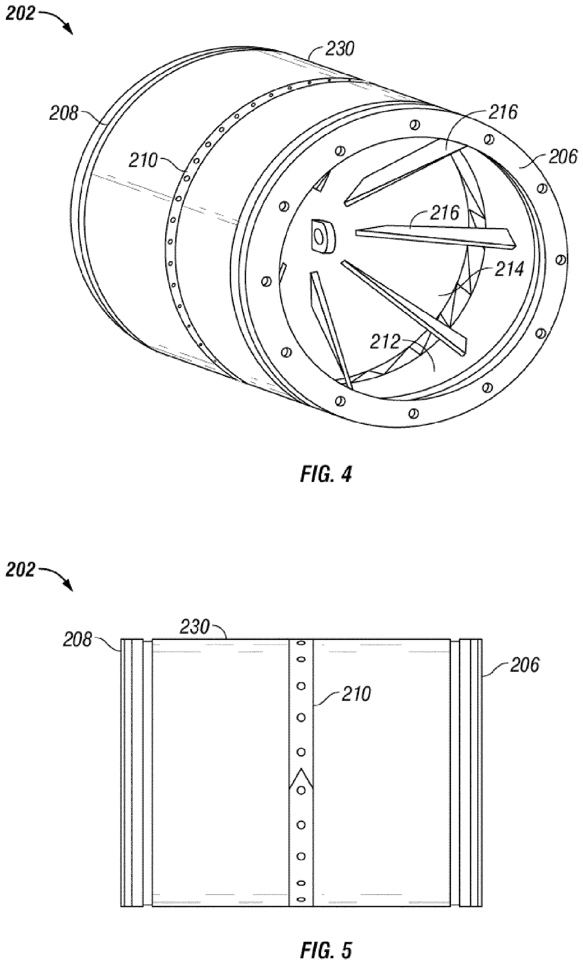

Referring now to Figure 4, an example not part of the invention of a prover piston 202 is shown. The piston 202 may be used in a variety of provers, such as prover 100. The piston 202 is especially suited for a bi-directional prover. The piston 202 includes a body 230 with ends 206, 208. A middle portion of the body 230 includes a ring 210 coupled thereto. An inner portion of the piston body 230 includes an inner surface 212 with a plate 214 extending therebetween, generally perpendicular to the longitudinal axis of the piston 202. A first set of vanes 216 extends from the plate 214. The vanes 216 generally extend perpendicular to the plate 214, but also at an angle to the plate 214 such that the vanes may receive a fluid acting on the plate 214 and redirect a force applied to the plate 214. The angle of the vanes relative to the plate 214 is variable. In some examples not part of the invention, a second set of vanes is similarly disposed on an opposite side of the plate 214 to effect the same functions in a bi-directional manner.

Referring briefly to Figure 5, a side view of the piston 202 is shown illustrating the body 230 having the ends 206, 208 and the ring 210.

In some examples not part of the invention, the ring 210 is the target ring associated with the piston 202. In some examples not part of the invention, the ring 210 includes materials having magnetic properties. In certain examples not part of the invention, the ring 210 comprises materials that are either carbon-free or have carbon traces. In examples not part of the invention, the ring 210 comprises high mu (µ) metal. In examples not part of the invention, the ring 210 comprises HYMU or HYMU 80 metal components. In examples not part of the invention, the ring 210 comprises various combinations of nickel, iron, copper and/or molybdenum. The attachment of the target ring 210 to the piston 202 is designed to allow expansion and contraction of the target ring 210 such that it can expand and contract yet maintain a constant physical relationship not exceeding one in ten thousand repeatability.

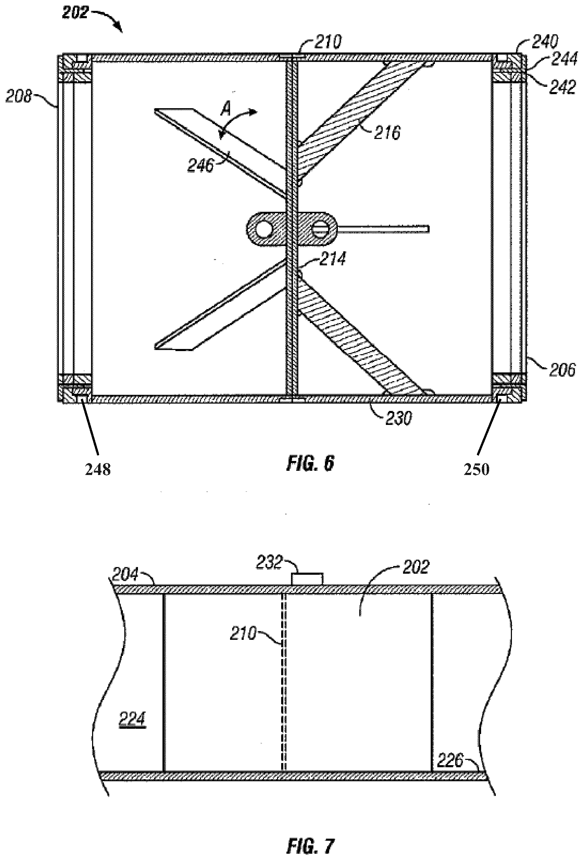

With reference to Figure 7, a flow tube 204 containing the piston 202 may include a magnetic pickup coil 232 mounted thereon. The piston 202 is moveably and reciprocally disposed in a flow passage 224 of the flow tube 204 such the piston 202 can pass the magnetic pickup coil 232 in a bi-directional manner. As the target ring 210 passes the pickup coil 232, the ring and coil communicate via the magnetic reluctance or induction principle. The target ring 210 provides the magnetic or inductive force flux which is received by the pickup coil 232. The target ring 210 passes in a pre-determined proximity, referred to as the air gap, and causes a deflection in the existing magnetic field of the pickup coil 232. The change in reluctance or induction of the resulting magnetic circuit generates a voltage pulse, which is then transmitted to a preamplifier. The preamplifier strengthens the signal, which is used to trigger a prover computer, such as those disclosed herein, to collect meter pulses from the meter which is being proven.

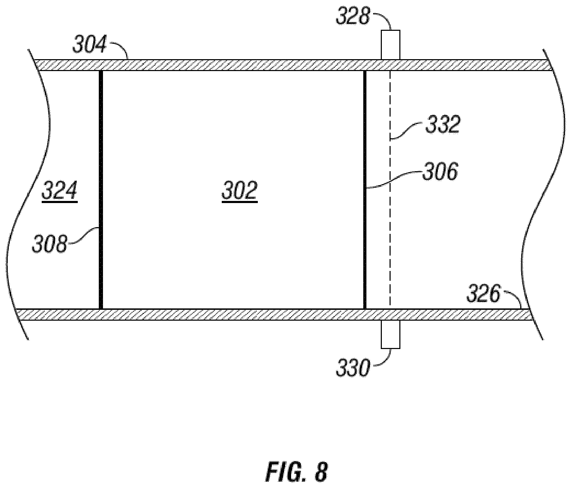

In another example not part of the invention, and with reference to Figure 8, a sensing assembly comprising a pair of ultrasonic transceivers 328, 330 is mounted on a flow tube 304 of a piston or compact prover. The transceivers 328, 330 may also be referred to as ultrasonic speed of sound transceivers. A piston assembly 302 is bi-directionally moveable in a flow passage 324 of the flow tube 304. The transceivers 328, 330 communicate via a straight line sonic signal 332. When the leading edge of the piston 302, whether it be the end 306 or the end 308, aligns with the transceivers 328, 330, the signal 332 is interrupted. Interruption of the signal 332 triggers a prover computer, causing operation of the remainder of the prover and prover computer in the normal way. In additional examples not part of the invention, the transceivers 328, 330 include inductive type linear displacement transducers, or are adapted to transmit other interruptible signals 332 such as laser beam, LED beam, or radar beam.

Still referring to Figures 7 and 8, the flow passages 224 and 324 include inner surfaces 226, 326, respectively. Typically, the prover flow tube or barrel comprises piping material well defined by applicable material specifications. The internal finish of the prover barrel, such as those on surfaces 226, 326, is normally graphite impregnated epoxy applied by conventional spray paint methodology. Due to the non-lubricity of certain hydrocarbon products to be proved, such as butanes, propanes and LPG's, the coating on the finished inner surfaces assists the displacer piston in moving smoothly through the prover barrel. This is a requirement for consistent and accurate proving. However, these coatings are not suitable for the lower temperatures defined herein. Thus, the surfaces 226, 326 of the examples not part of the invention of Figures 7 and 8 include a microfinish. The microfinish of the surfaces 226, 326 allows a microscopic film of product to be maintained at the surfaces 226, 326, thereby maximizing the already low degree of lubrication the product is able to inherently afford. In examples not part of the invention, the microfinishes applied to the surfaces 226, 326 include approximately 0.8128 micrometer (32 microinch) to 0.4064 micrometer (16 microinch) obtained by honing, milling or grinding.

Referring now to Figure 6, a cross-section taken along an axial length of the prover piston 202 is shown. The piston body 230 includes at its end 206 a first ring 240, a second ring 242 and a socket 244, primarily for assembly purposes. The rings 240, 242 provide alternative locations for the target ring as described herein to be disposed, in addition to the location described with respect to target ring 210. The end 206 and another end 208 include seals 248, 250 disposed circumferentially about the piston body 230. The first set of vanes 216 extends in a first direction from the plate 214, and a second set of vanes 246 extends in a second direction generally opposite the first direction to effect bi-directional movement of the piston 202. Further, the vanes 216, 246 are variably angled to provide the functions as described more fully below.

Generally, the displacer seals 248, 250 on the piston 202 provide a leak-proof barrier to prevent product from transitioning from one side of the piston 202 to the other. Specifically, seals 248, 250 prevent against leakage across piston 202 as the piston is displaced between the detector switches of the prover, ensuring that the volume of fluid proved during the pass accurately and repeatably represents the calibrated volume of the prover. The seals 248, 250 can deteriorate based on two main causes. First, the friction of passage of the piston through the prover during normal operation can, over time, deteriorate the seal surface. The length of time to deterioration and seal failure is determined by frequency of use of the prover. The second factor that contributes to wear of the piston assembly is the gravitational forces on the seals caused by the weight of the piston. Focusing on this second factor can provide benefits.

Rotational movement of the piston about its axis, causing the piston 202 to spiral in the flow tube 204 as it is displaced, will reduce the wear factor and prolong the life of the piston seals. The rotational vanes 216, 246 provide the rotational or spiral movement of the piston 202. Introduction of flow perpendicular to the piston end will rotate the piston according to a variable angle A of the vanes. Stops may be put in the prover ends corresponding to the piston, and which are not encumbered by the vanes. The stops prevent the vanes from being distorted by the piston coming to rest at the end of the flow tube or prover barrel.

The examples not part of the invention herein include a direct meter proving method, such that fluid flowing to the meter is diverted directly to the prover despite the fluids being at very low temperatures that cannot be managed by current piston and compact provers. The fluid may be directed through the prover and then downstream to piping that re-introduces the product into the carrying pipeline. While not common, the prover sometimes is located upstream of the meter such that the flow is directed to the prover and then flows through the meter. The purpose of the prover is to provide a known volume to compare to an indicated metered volume. The two volumes are then standardized using correction factors for temperature, pressure and density parameters for the product to establish a meter factor. The meter factor is derived by dividing the volume of the fluid passing through the meter (determined by the prover volume while proving) by the corresponding meter-indicated volume. The prover volume is the volume displaced between the detector switches. The prover volume is established by precisely determining the volume between detector switches (also called the base volume of the prover) by a method called the waterdraw method, as described by the American Petroleum Institute.

Accuracy of a bidirectional piston-type pipe prover and the overall measurement station, when operating at temperatures of less than 227.6 K (-50° F), and specifically at temperatures approximating 133.15 K (-220° F), is significantly affected by limitations in component materials. A valve, such as a 4-way valve, is unavailable for directional control of displacer movement in a bi-directional prover for very low temperatures and therefore renders other prover types used in normal temperature service inoperable for very low temperatures. The detector sensing ring and the detector devices in provers are unsuitable for low temperature service. Self-lubricating coatings for use with non-lubrous products such as LPG are unavailable for low temperature service. The examples not part of the invention described herein address these problems and others.

Examples not part of the invention of a flow meter prover for low temperature fluids include an inlet configured to be directly coupled to a pipeline carrying the low temperature fluids, an outlet configured to be directly coupled to the pipeline carrying the low temperature fluids, a flow tube coupled between the inlet and the outlet, and a displacer moveable in a flow passage of the flow tube, wherein the flow tube and the displacer are configured to receive the low temperature fluids. In an example not part of the invention, the prover further includes a magnetic pickup coil coupled to the flow tube and a magnetic member coupled to the displacer communicating with the magnetic pickup coil via magnetic reluctance or induction. The displacer may be a piston and the magnetic member may be a target ring wrapped around the piston. In another example not part of the invention, the prover includes a magnetic pickup coil coupled to the flow tube and a carbon-free target member coupled to the displacer communicating with the magnetic pickup coil. In another example not part of the invention, the target member coupled to the displacer includes a material having carbon traces. In a further example not part of the invention, the prover includes a pair of ultrasonic transceivers coupled to the flow tube and communicating a signal across the flow passage in the flow tube and wherein the displacer is moveable in the flow passage to interrupt the signal.

In some examples not part of the invention, the flow passage of the prover includes an inner surface having a microfinish. The microfinish maintains a microscopic film of the low temperature fluids between the flow passage inner surface and the displacer for lubrication. The microfinish may be in the range of 0.8128 micrometer (32 microinch) to 0.4064 micrometer (16 microinch). The microfinish may be obtained by at least one of honing, milling, and grinding the inner surface. In other examples not part of the invention, the displacer includes a vane disposed at an angle relative to the flow direction of the low temperature fluids. The displacer may be a piston including a set of inner vanes extending along a longitudinal axis of the piston and set an angle relative to the axis. The vane rotates the displacer in response to the flow of the low temperature fluids.

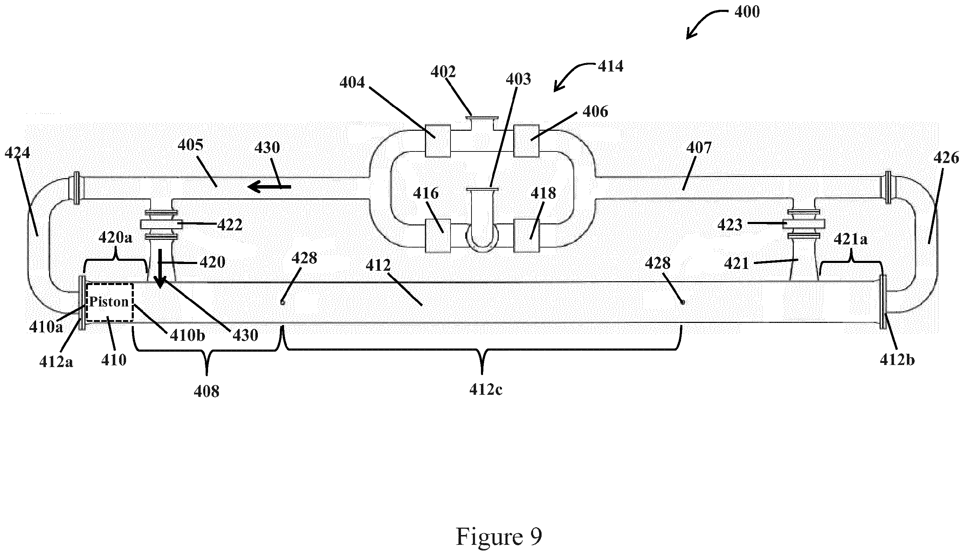

Referring now to Figure 9, a bi-directional, piston-type prover 400 is illustrated and configured for use with low temperature fluids and equipped with a "piston launch hold" facility. Bi-directional prover 400 generally includes a manifold 414, pipe sections 405 and 407, a prover barrel 412 having a first end 412a and a second end 412b, by-pass sections 420 and 421, and u-bend sections 424 and 426. Manifold 414 includes an inlet 402 and outlet 403, wherein inlet 402 and outlet 403 are configured to couple directly with a pipeline carrying fluids, such as low or very low temperature fluids. Manifold 414 further includes a pair of inlet valves 404 and 406, and a pair of outlet valves 416 and 418. Manifold 414, via the use of four independent valves (inlet valves 404, 406, and outlet valves 416, 418), is configured to allow for the handling of low temperature fluids. However, in other examples not part of the invention, the bi-directional prover 400 may include a four-way valve instead of manifold 414, such as in the case where the prover is not required to directly prove low temperature fluids.

Coupled to manifold 414 are two sections 405 and 407, which are configured to provide fluid communication between manifold 414 and both the u-bend sections 424, 426, and the bypass sections 420, 421. U-bend section 424 couples between section 405 and the first end 412a of prover barrel 412 while u-bend section 426 couples between section 407 and second end 412b. Bypass sections 420 and 421 each include a bypass valve 422 and 423, and couple to barrel 412. In the example not part of the invention of prover 400, bypass section 420 couples to barrel 412 at a distance 420a from first end 412a while bypass section 421 couples at a distance 421a from second end 412b. Thus, while u-bend sections 424, 426 provide for fluid communication between sections 405, 407 and ends 412a, 412b of prover barrel 412, bypass sections 420, 421 each provide selective fluid communication between sections 405, 407 and locations in the prover barrel 412 displaced from ends 412a, 412b (i.e., locations disposed at distances 420a, 421a, from ends 412a, 412b, respectively).

Prover barrel 412 includes a piston-style displacer 410 disposed therein having a first end 410a and a second end 410b. Prover barrel 412 further includes two detectors 428, disposed at a known distance 412c apart from each other. Distance 412c and the inner diameter of barrel 412 account for the calibrated volume of prover 400. Thus, prover 400 may generate a meter factor via passing displacer 410 along the distance 412c between detectors 428, where the passing of a leading side of displacer 410 (e.g., second side 410b when displacer 410 is displaced toward second end 412b) trips the detectors 428 as displacer 410 passes through barrel 412. In the example not part of the invention of prover 400, displacer 410 includes a carbon-free target member and both detectors 428 comprise magnetic pick-up coils, as described previously. However, in other examples not part of the invention displacer 410 need not include a carbon-free target member and detectors 428 could comprise other forms of detectors, such as ultrasonic transducers. For instance, in another example not part of the invention the target member may include a material having carbon traces.

In order for a prover to accurately measure its calibrated volume, the entire volume of fluid from the fluid stream passing through the pipeline coupled to manifold 414 must enter inlet 402 of prover 400 without bypassing the prover barrel 412, such as by leaking through an alternative fluid pathway. For instance, fluid entering inlet 402 may leak through an outlet valve 416, 418. Since there exists a period of time, known as "cycle time," that takes place when a valve (e.g., valves 404, 406, 416 and 418) is transitioning from closed-to-open or open-to-closed, a pre-run length 408 is required to allow the outlet valve 416 time to completely seal before the displacer 410 has passed a detector 428. Due to the increased number of valves used to inlet and outlet fluid when using a valve manifold (e.g., manifold 414) versus a four-way valve when proving low temperature fluids, the period of time between initiating the closing of the respective outlet (e.g., valve 416 or 418, depending on the direction of travel of displacer 410) valve and reaching a fully closed and sealed state increases, necessitating a longer pre-run length. A longer pre-run length results in a longer prover barrel, which may significantly increase the overall cost of the prover due to the barrel's expensive materials of construction and the honing and other machine work performed on its inner surface in order to provide for the proper lubricative surface finish.

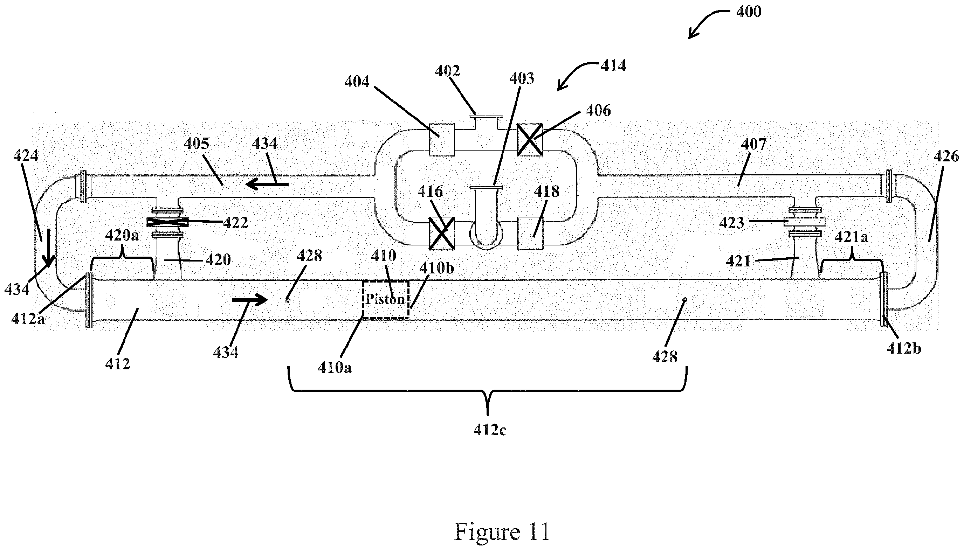

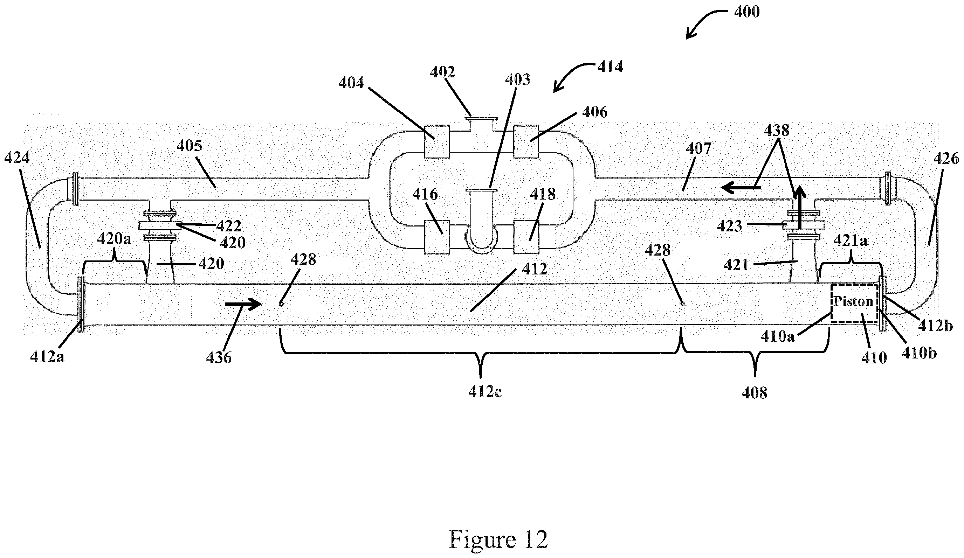

In order to minimize the pre-run length (e.g., length 408) in a low temperature prover, prover 400 is equipped with a piston launch hold facility. Figures 9, 10, 11, 12, 13 and 14 illustrate the operation of prover 400, including the piston launch hold facility. Figures 11, 12 illustrate the "out" and "back" proving passes of prover 400. Referring first to Figure 9, before the first or out proving pass has initiated, all valves (i.e., inlet 404, 406, outlet 416, 418 and bypass 422, 423) are in the open position and the first end 410a of displacer 410 is disposed adjacent to the first end 412a of the prover barrel 412. At the initiation of the proving sequence, inlet valve 406 and outlet valve 416 begin closing, directing the fluid flow from inlet 402 through the open bypass valve 422 and along a fluid flowpath 430. As fluid flowing along flowpath 430 flows through the bypass valve 420 and into the prover barrel 412, pressure from fluid in flowpath 430 begins to pressurize the second end 410b of the displacer 410. The force created by fluid pressure from the flow of the fluid along flowpath 430 acts to "hold" the displacer 410 in place adjacent to first end 412a of the prover barrel 412 because fluid flowing along flowpath 430 bypasses U-bend 424 and flows instead through bypass section 420.

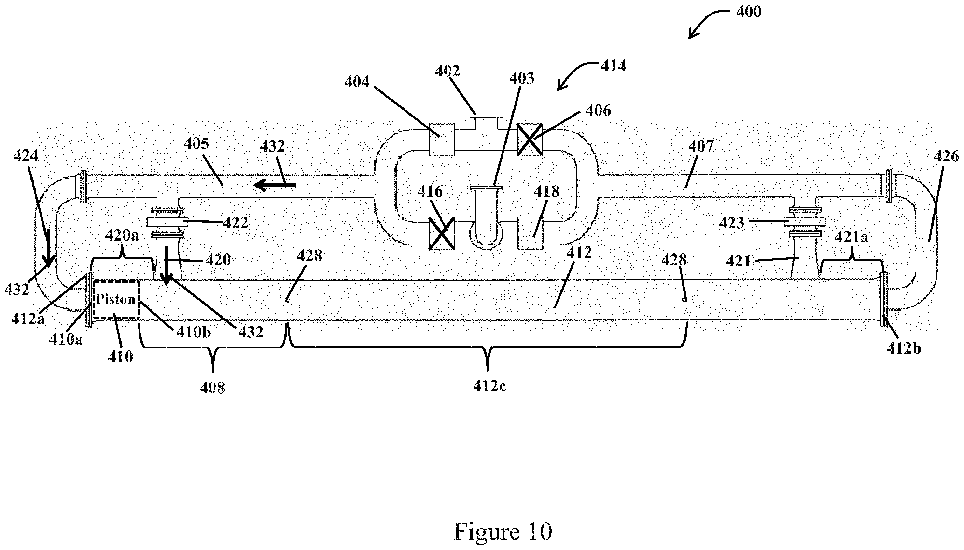

Referring next to Figure 10, once the inlet and outlet valves 406, 416 have completely closed, thus preventing any fluid from escaping, the bypass valve 422 begins closing. As the bypass valve 422 begins to close, fluid flow starts to divert through the left pipe U-bend 424 along fluid flowpath 432. The fluid flow along flowpath 432 through U-bend 424 pressurizes the first end 410a (upstream end) of the displacer 410. While the bypass valve 422 is transitioning from an open to a closed state, a portion of the fluid in flowpath 432 continues to flow through the bypass valve 422 (as shown by the arrow), causing fluid pressure from each portion of fluid in flowpath 432 to act on each end 410a, 410b) of displacer 410.

Referring now to Figure 11, once the bypass valve 422 has completed its cycle time and is completely closed, thereby preventing fluid communication across bypass 420, the entire fluid stream entering inlet 402 flows through the left U-bend 424 along fluid flowpath 434. The fluid flow 434 thereby launches the displacer 410 at a high rate of acceleration until matching the volumetric flow rate of the fluid within the pipeline coupled to inlet 402, as now the entire fluid stream is acting on the first end 410a of piston 410. In the example not part of the invention of prover 400, the volumetric flow rate of fluid flowing along flowpath 434 has matched the volumetric flow rate of the fluid passing through the pipeline coupled to inlet 402 prior to the point where the second end 410b of the displacer 410 has passed detector 428 and entered distance 412c.

Referring to Figure 12, after the displacer 410 has passed through the calibrated section 412c of the prover barrel 412 and the second end 410b has come to rest along second end 412b of the barrel 412, valves 406, 416 and 422 are opened, concluding the first or out proving pass. Once displacer 410 has come to rest at second end 412b of barrel 412, fluid having entered inlet 402 may exit prover 400 via bypass 421 along fluid flowpath 436, 438.

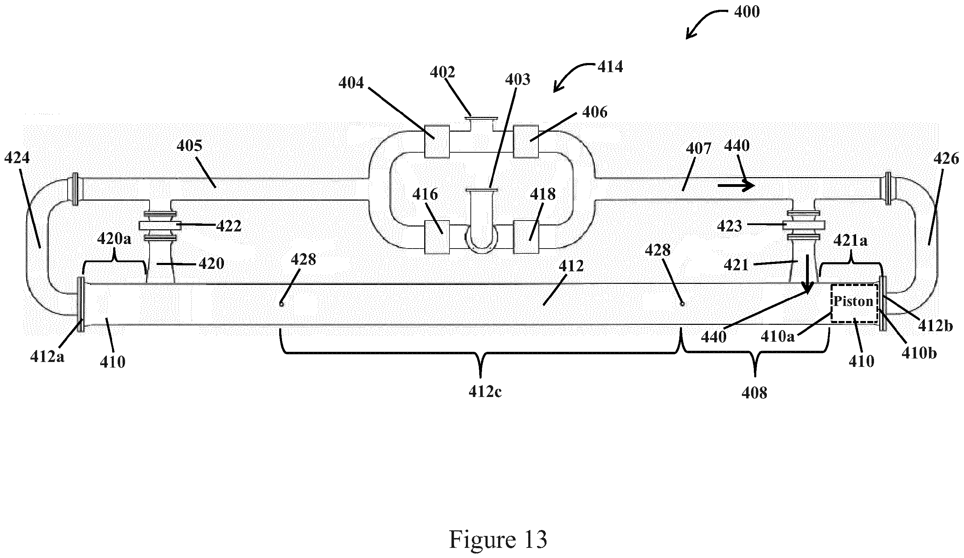

Referring to Figure 13, once all valves have completely opened (i.e., valves 406, 416 and 422), the second back proving pass begins by closing inlet valve 404 and outlet valve 418. As inlet valve 404 and outlet valve 418 begin to close, fluid entering inlet 402 from the pipeline begins flowing through bypass section 421 and valve 423 along fluid flowpath 440, pressurizing the second end 410b of displacer 410.

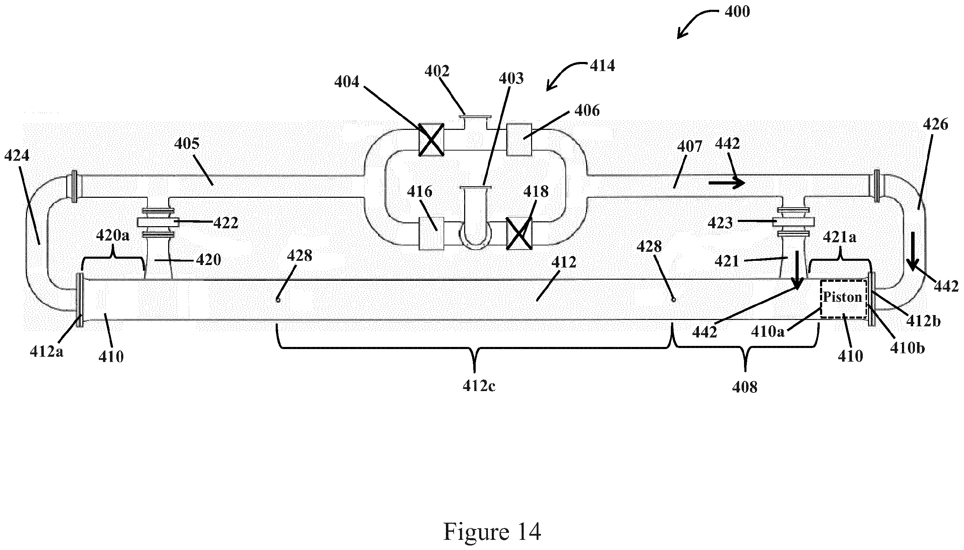

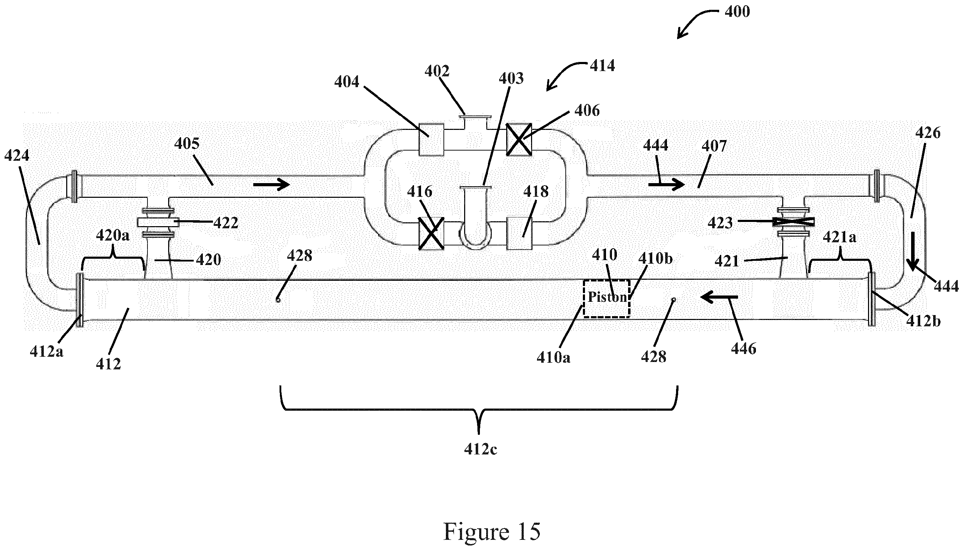

Referring now to Figure 14, once inlet valve 404 and outlet valve 418 finish closing, the bypass valve 423 of bypass section 421 begins to close, diverting a portion of the fluid stream entering inlet 402 through the right U-bend section 426 along fluid flowpath 442. Referring finally to Figure 15, once the bypass valve 423 of section 421 is completely closed, the entire fluid stream entering inlet 402 flows along fluid flowpath 444, forcibly acting against the second end 410b of displacer 410, passing displacer 410 back towards the first end 412a of the prover barrel 412, and finishing the second or back proving pass of the bi-directional prover 400.

Referring briefly back to Figure 6, due to the need for high accuracy in calculating the volume of fluid displaced in a given proving sequence, it is important for the seals 248, 250 of the piston 202 to maintain adequate seal integrity. Any fluid within the flow tube during a given proving pass that is allowed to transition from one side of the piston to the other through a seal leak will not be included in the volume of liquid displaced by the piston, and thus will result in error when computing the fluid volume passing through the meter (prover volume). This error will in turn negatively affect the accuracy of the prover because the flow meter's meter factor is computed by dividing the prover volume by the corresponding meter-indicated volume. Also, through friction from normal operation, seals can become worn and lose their ability to form a quality seal. Moreover, friction may be aggravated in applications requiring larger and heavier pistons due to high volumetric flow rates or applications involving non-lubrous fluids, such as LNG. In order to protect against seal failure, pistons must be periodically uninstalled from the prover and inspected. In order to mitigate the expense and time consumed by this procedure, a "seal leak detect" device is included with a prover according to the invention.

Referring now to Figure 16, a prover 500 including a seal leak detect feature includes similar components of the prover illustrated in Figure 3, and thus are labeled similarly. Further, prover 500 also includes a port 501, a fluid line 502, a pump 503 and a pressure indicator 504. Port 501 is coupled to the flow tube 104 of prover 500 and provides for fluid communication between flow tube 104 and the fluid line 502. Pump 503 is also coupled to and in fluid communication with line 502, and thus, upon activation, pump 503 may pump or displace fluid from flow tube 104 via fluid line 502. Pressure indicator 504 is also coupled to fluid line 502 and is in fluid communication with flow tube 104, and thus indicates the real time fluid pressure within flow tube 104.

Still referring to Figure 16, while the piston 102 of prover 500 is stationary within the flow tube 104, the integrity of piston seals 506 and 508 of piston 102 is tested without disassembling prover 500 (e.g., via opening flow tube 102 to the atmosphere, pulling piston 102 from flow tube 104, etc.) through the creation of a pressure differential between the volume 510 enclosed by seals 506 and 508 of piston 102 (i.e., the annular gap between the outer diameter of piston 102 and the inner diameter of flow tube 104) and the volume in the remaining part of the flow tube 104. Without disassembling the prover 500, the integrity of the piston seals 506, 508 is inspected by activating the pump 503 in an attempt to create a substantial vacuum or below line pressure reading within the volume 510 enclosed by the two piston seals 506 and 508, by pumping fluid out of volume 510 via fluid line 502 and into the surrounding atmosphere. While pump 503 is activated, the pressure indicator 504 is used to determine whether the suction from the pump has resulted in the reading of below line pressure within volume 510 by indicator 504, meaning the seals 506 and 508 are substantially sealing out the remaining fluid within flow tube 104. If a below line pressure reading is not displayed by indicator 504 over a specified period of time through the action of pump 503 pumping fluid from volume 510, operators of prover 500 will now be cognizant of the failure of seals 506 and 508, and may uninstall the piston 102 in order to make the required repairs.

The above discussion is meant to be illustrative of the principles and various embodiments of the present disclosure. While certain embodiments have been shown and described, modifications thereof can be made by one skilled in the art without departing from the teachings of the disclosure. The embodiments described herein are exemplary only, and are not limiting. Accordingly, the scope of protection is not limited by the description set out above, but is only limited by the claims.

## Claims

1. A flow meter prover (500) including a leak detection system, the flow meter prover comprising:
a flow tube (104);
a displacer (102) disposed within the flow tube (104) having a plurality of seals (506, 508);
a fluid line (502) in fluid communication with the flow tube (104);
**characterized by** a pumping mechanism (503) in fluid communication with the fluid line (502) to create a pressure differential between a volume of the flow tube (104) surrounding the displacer (102) and a volume (510) enclosed by the seals (506, 508) of the displacer (102), and wherein the pumping mechanism (503) is configured to pump fluid disposed in the volume (510) enclosed by the seals (506, 508) of the displacer (102) into the surrounding atmosphere; and
a pressure indicator (504) in fluid communication with the fluid line (502) to indicate the pressure of the fluid contained within the volume (510) enclosed by the seals (506, 508) of the displacer (102).

2. The flow meter prover (500) of claim 1, wherein the fluid line (502) and displacer (102) are axially aligned such that the flow tube (104) is in fluid communication with the volume (510) of fluid enclosed by the seals (506, 508) of the displacer (102).

3. The flow meter prover (500) of claim 1 or 2, wherein the pumping mechanism (503) is configured to create a substantial vacuum in the volume (510) enclosed by the seals (506, 508) of the displacer (102).

4. The flow meter prover (500) of any preceding claim, wherein the pressure indicator (504) is configured to indicate the pressure of the fluid contained within the volume (510) enclosed by the seals (506, 508) of the displacer (102) in real time.

5. A method for detecting leaks in a flow meter prover (500), the method comprising:
initiating a pumping mechanism (503) coupled to a flow line (502) to create a pressure differential between a volume of a flow tube (104) surrounding a displacer (102) disposed in the flow tube (104) and a volume (510) enclosed by seals (506, 508) of the displacer (102);
**characterized by** initiating the pumping mechanism (503) to pump fluid from the volume (510) enclosed by the seals (506, 508) of the displacer (102) into the surrounding atmosphere; and
indicating the pressure of a fluid contained in the volume (510) enclosed by the seals (506, 508) of the displacer (102).

6. The method of claim 5, further comprising indicating a seal failure if the pressure of the fluid contained in the volume enclosed by the seals of the displacer is not below a line pressure of fluid contained in the flow tube.

7. The method of claim 6, further comprising replacing the seals of the displacer.

8. The method of claims 6 or 7, further comprising, before initiating the pumping mechanism, aligning a displacer such that the flow line connected to the flow tube is aligned between the seals of the displacer.

9. The method of any one of claims 5 to 8, further comprising initiating the pumping mechanism to create a substantial vacuum in the volume enclosed by the seals of the displacer.

10. The method of any one of claims 5 to 9, further comprising indicating the real time pressure within the volume enclosed by the seals of the displacer.

11. The method of any one of claims 5 to 10, further comprising indicating a seal failure in response to only indicating the real time pressure within the volume enclosed by the seals of the displacer.

## Patentansprüche

1. Durchflussmessgerät-Prüfer (500), der ein Leckortungssystem einschließt, wobei der Durchflussmessgerät-Prüfer Folgendes umfasst:
eine Durchflussröhre (104),
einen Verdrängungskörper (102), der innerhalb der Durchflussröhre (104) angeordnet ist, wobei er mehrere Dichtungen (506, 508) aufweist,
eine Fluidleitung (502) in Fluidverbindung mit der Durchflussröhre (104),
**gekennzeichnet durch** einen Pumpmechanismus (503) in Fluidverbindung mit der Fluidleitung (502), um einen Druckunterschied zwischen einem Volumen der Durchflussröhre (104), das den Verdrängungskörper (102) umgibt, und einem Volumen (510), das durch die Dichtungen (506, 508) des Verdrängungskörpers (102) eingeschlossen wird, zu schaffen, und wobei der Pumpmechanismus (503) dafür konfiguriert ist, Fluid, das sich in dem Volumen (510), das durch die Dichtungen (506, 508) des Verdrängungskörpers (102) eingeschlossen wird, befindet, in die umgebende Atmosphäre zu pumpen, und
einen Druckanzeiger (504) in Fluidverbindung mit der Fluidleitung (502), um den Druck des Fluids, das innerhalb des Volumens (510), das durch die Dichtungen (506, 508) des Verdrängungskörpers (102) eingeschlossen wird, enthalten ist, anzuzeigen.

2. Durchflussmessgerät-Prüfer (500) nach Anspruch 1, wobei die Fluidleitung (502) und der Verdrängungskörper (102) derart in Axialrichtung ausgerichtet sind, dass sich die Durchflussröhre (104) in Fluidverbindung mit dem Fluidvolumen (510), das durch die Dichtungen (506, 508) des Verdrängungskörpers (102) eingeschlossen wird, befindet.

3. Durchflussmessgerät-Prüfer (500) nach Anspruch 1 oder 2, wobei der Pumpmechanismus (503) dafür konfiguriert ist, ein beträchtliches Vakuum in dem Volumen (510), das durch die Dichtungen (506, 508) des Verdrängungskörpers (102) eingeschlossen wird, zu erzeugen.

4. Durchflussmessgerät-Prüfer (500) nach einem der vorhergehenden Ansprüche, wobei der Druckanzeiger (504) dafür konfiguriert ist, den Druck des Fluids, das in dem Volumen (510) enthalten ist, das durch die Dichtungen (506, 508) des Verdrängungskörpers (102) eingeschlossen wird, in Echtzeit anzuzeigen.

5. Verfahren zum Orten von Lecks in einem Durchflussmessgerät-Prüfer (500), wobei das Verfahren Folgendes umfasst:
Starten eines Pumpmechanismus (503), der mit einer Fluidleitung (502) verbunden ist, um einen Druckunterschied zwischen einem Volumen einer Durchflussröhre (104), das einen Verdrängungskörper (102) umgibt, und einem Volumen (510), das durch Dichtungen (506, 508) des Verdrängungskörpers (102) eingeschlossen wird, zu schaffen,
**gekennzeichnet durch** Starten des Pumpmechanismus (503), um Fluid aus dem Volumen (510), das durch die Dichtungen (506, 508) des Verdrängungskörpers (102) eingeschlossen wird, in die umgebende Atmosphäre zu pumpen, und
Anzeigen des Drucks eines Fluids, das in dem Volumen (510) enthalten ist, das durch die Dichtungen (506, 508) des Verdrängungskörpers (102) eingeschlossen wird.

6. Verfahren nach Anspruch 5, das ferner das Anzeigen eines Dichtungsversagens umfasst, falls der Druck des Fluids, das in dem Volumen enthalten ist, das durch die Dichtungen des Verdrängungskörpers eingeschlossen wird, nicht unterhalb eines Leitungsdrucks von Fluid, das in der Durchflussröhre enthalten ist, liegt.

7. Verfahren nach Anspruch 6, das ferner das Ersetzen der Dichtungen des Verdrängungskörpers umfasst.

8. Verfahren nach Anspruch 6 oder 7, das ferner, vor dem Starten des Pumpmechanismus, das Ausrichten eines Verdrängungskörpers derart, dass die Durchflussleitung, die mit der Durchflussröhre verbunden ist, zwischen den Dichtungen des Verdrängungskörpers ausgerichtet ist, umfasst.

9. Verfahren nach einem der Ansprüche 5 bis 8, das ferner das Starten des Pumpmechanismus umfasst, um ein beträchtliches Vakuum in dem Volumen, das durch die Dichtungen des Verdrängungskörpers eingeschlossen wird, zu schaffen.

10. Verfahren nach einem der Ansprüche 5 bis 9, das ferner das Anzeigen des Echtzeitdrucks innerhalb des Volumens, das durch die Dichtungen des Verdrängungskörpers eingeschlossen wird, umfasst.

11. Verfahren nach einem der Ansprüche 5 bis 10, das ferner das Anzeigen eines Dichtungsversagens als Reaktion darauf umfasst, dass nur der Echtzeitdruck innerhalb des Volumens, das durch die Dichtungen des Verdrängungskörpers eingeschlossen wird, angezeigt wird.

## Revendications

1. Appareil d'étalonnage de débitmètre (500) incluant un système de détection de fuites, l'appareil d'étalonnage du débitmètre comprenant :
un tube d'écoulement (104) ;
un moyen de refoulement (102) disposé dans le tube d'écoulement (104) comportant plusieurs joints d'étanchéité (506, 508) :
une conduite de fluide (502) en communication de fluide avec le tube d'écoulement (104) ;
**caractérisé par** un mécanisme de pompage (503) en communication de fluide avec la conduite de fluide (502) pour établir une différence de pression entre un volume du tube d'écoulement (104) entourant le moyen de refoulement (102) et un volume (510) renfermé par les joints d'étanchéité (506, 508) du moyen de refoulement (106), et dans lequel le mécanisme de pompage (503) est configuré pour pomper le fluide disposé dans le volume (510) renfermé par les joints d'étanchéité (506, 508) du moyen de refoulement (102) dans l'atmosphère environnante ; et
un indicateur de pression (504) en communication de fluide avec la conduite de fluide (502) pour indiquer la pression du fluide contenu dans le volume (510) renfermé par les joints d'étanchéité (506, 508) du moyen de refoulement (102).

2. Appareil d'étalonnage de débitmètre (500) selon la revendication 1, dans lequel la conduite de fluide (502) et le moyen de refoulement (102) sont alignés axialement, de sorte que le tube d'écoulement (104) est en communication de fluide avec le volume (510) de fluide renfermé les joints d'étanchéité (506, 508) du moyen de refoulement (102).

3. Appareil d'étalonnage de débitmètre (500) selon les revendications 1 ou 2, dans lequel le mécanisme de pompage (503) est configuré pour créer un vide substantiel dans le volume (510) renfermé par les joints d'étanchéité (506, 508) du moyen de refoulement (102).

4. Appareil d'étalonnage de débitmètre (500) selon l'une quelconque des revendications précédentes, dans lequel l'indicateur de pression (504) est configuré pour indiquer en temps réel la pression du fluide contenu dans le volume (510) renfermé par les joints d'étanchéité (506, 508) du moyen de refoulement (102).

5. Procédé de détection de fuites dans un appareil d'étalonnage de débitmètre (500), le procédé comprenant les étapes ci-dessous :
amorçage d'un mécanisme de pompage (503) accouplé à une conduite de fluide (502) pour établir une différence de pression entre un volume d'un tube d'écoulement (104) entourant un moyen de refoulement (102) disposé dans le tube d'écoulement (104) et un volume (510) renfermé par des joints d'étanchéité (506, 508) du moyen de refoulement (102) ;
**caractérisé par** l'étape d'amorçage du mécanisme de pompage (503) pour pomper le fluide du volume (510) renfermé par les joints d'étanchéité (506, 508) du moyen de refoulement (102) dans l'atmosphère environnante ; et
indication de la pression d'un fluide contenu dans le volume (510) renfermé par les joints d'étanchéité (506, 508) du moyen de refoulement (102).

6. Procédé selon la revendication 5, comprenant en outre l'étape d'indication d'une défaillance des joints d'étanchéité lorsque la pression du fluide contenu dans le volume renfermé par les joints d'étanchéité du moyen de refoulement n'est pas inférieure à une pression de ligne du fluide contenu dans le tube d'écoulement.

7. Procédé selon la revendication 6, comprenant en outre l'étape de remplacement des joints d'étanchéité du moyen de refoulement.

8. Procédé selon les revendications 6 ou 7, comprenant en outre l'étape, avant l'amorçage du mécanisme de pompage, d'alignement d'un moyen de refoulement, de sorte que la conduite d'écoulement connectée au tube d'écoulement est alignée entre les joints d'étanchéité du moyen de refoulement.

9. Procédé selon l'une quelconque des revendications 5 à 8, comprenant en outre l'étape d'amorçage du mécanisme de pompage pour créer un vide substantiel dans le volume renfermé par les joints d'étanchéité du moyen de refoulement.

10. Procédé selon l'une quelconque des revendications 5 à 9, comprenant en outre l'étape d'indication d'une pression en temps réel dans le volume renfermé par les joints d'étanchéité du moyen de refoulement.

11. Procédé selon l'une quelconque des revendications 5 à 10, comprenant en outre l'étape d'indication d'une défaillance des joints d'étanchéité en réponse à la seule indication de la pression en temps réel dans le volume renfermé par les joints d'étanchéité du moyen de refoulement.
